Europäisches Patentamt

European Patent Office

Office européen des brevets

(19)

(11) Numéro de publication : **0 296 960 B1**

# (12) FASCICULE DE BREVET EUROPEEN

(45) Date de publication du fascicule du brevet :
20.03.91 Bulletin 91/12

(51) Int. Cl.⁵ : **F16C 33/78, B60G 15/00**

(21) Numéro de dépôt : **88401544.7**

(22) Date de dépôt : **21.06.88**

(54) **Roulement axial, notamment pour suspensions à amortisseur de véhicules automobiles.**

(30) Priorité : **23.06.87 FR 8708805**

(43) Date de publication de la demande :
**28.12.88 Bulletin 88/52**

(45) Mention de la délivrance du brevet :
**20.03.91 Bulletin 91/12**

(84) Etats contractants désignés :
**AT DE GB IT SE**

(56) Documents cités :
**EP-A- 0 084 229**
**EP-A- 0 247 394**
**FR-A- 2 457 410**
**US-A- 4 541 744**

(73) Titulaire : **S.N.R. ROULEMENTS**
**Boîte Postale 17 1, rue des Usines**
**F-74010 Annecy Cédex (FR)**

(72) Inventeur : **Mermoud, Gérard**
**Route des Vieux Rotets**
**F-74330 La Balme de Sillingy (FR)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

# Description

L'invention concerne un roulement axial, notamment pour suspensions à amortisseur de véhicules automobiles du type comportant deux pistes de roulement respectivement portées par une bague supérieure et une bague inférieure, une pluralité de corps roulants disposés entre lesdites bagues et un joint d'étanchéité à lèvres circulaires muni de moyens d'assemblage des bagues.

Un tel roulement connu par la publication FR-A 2389036 est placé dans un élément de la carrosserie et reçoit la poussée axiale d'une coupelle d'appui du roulement montée sur la tige de l'amortisseur. Dans un tel montage, le remplacement de l'amortisseur ne peut être envisagé sans démontage du roulement. Il s'ensuit que celui-ci est trop souvent remplacé à la suite des détériorations subies au cours du démontage.

L'invention a pour objet un roulement axial placé dans un élément de la carrosserie, maintenu au contact de la paroi dudit élément, dans le but de permettre l'immobilisation de ce roulement par rapport à la carrosserie à la suite de l'annulation de la poussée axiale communiquée par l'amortisseur.

L'invention a également pour objet un roulement axial à joints d'étanchéité radial et axial portant des moyens d'assemblage du roulement et des moyens de retenu de ce dernier dans l'élément de la carrosserie, dans le but de conserver l'étanchéité du roulement tant que celui-ci est fixé à la carrosserie.

Selon l'invention, les buts précités sont atteints par le fait que les lèvres du joint d'étanchéité sont réunies par leur base à une âme cylindrique qui s'étend radialement vers l'extérieur par des griffes pour l'assemblage axial des bagues du roulement et par des griffes pour la retenue axiale du roulement sur un élément de carrosserie du véhicule.

D'autres avantages et caractéristiques de l'invention apparaîtront à la lecture de la description qui va suivre faite en référence au dessin annexé dans lequel :

— la figure 1 est une vue en perspective du roulement conforme à l'invention,

— la figure 2 est une vue en coupe du roulement représenté à la figure 1,

— la figure 3 est une vue en coupe partielle du roulement monté sur un élément de carrosserie.

La suspension de roue par amortisseur étant d'une conception connue de l'homme de l'art, la description qui suit concerne les seules dispositions originales du montage du roulement selon l'invention.

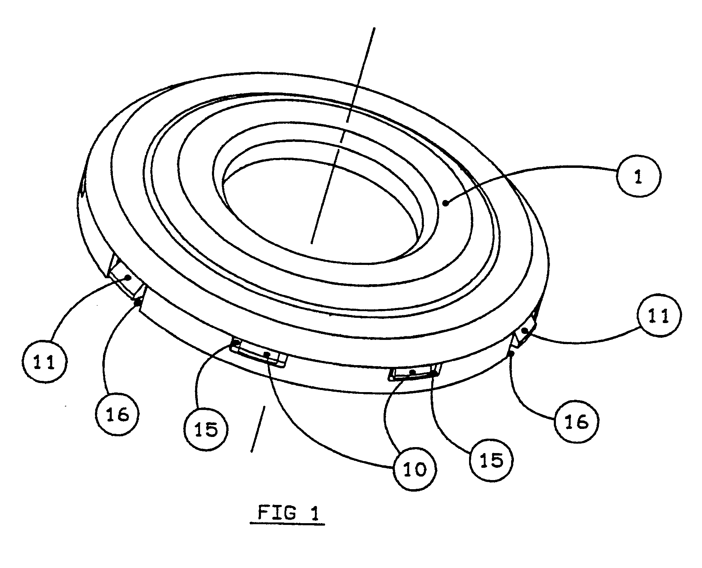

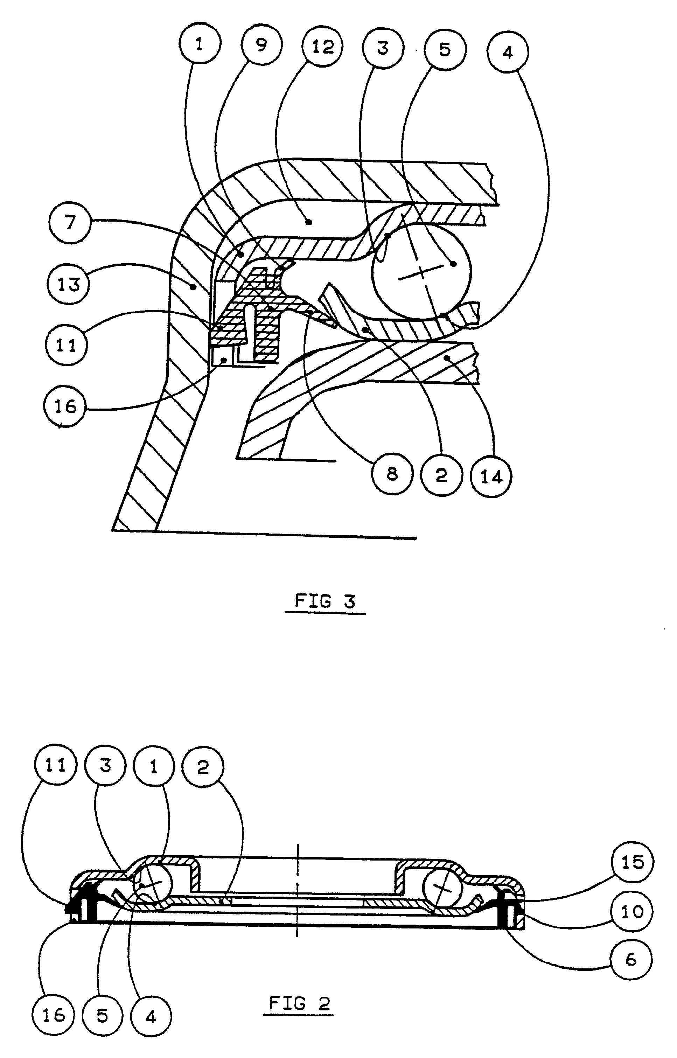

Le roulement axial représenté aux figures 1 et 2 est constitué par une bague supérieure 1 et une bague inférieure 2 portant les pistes 3, 4 de roulement. Une pluralité de corps roulants 5 est disposée entre les bagues 1, 2 assemblées entre elles par un joint d'étanchéité 6 à lèvres circulaires flexibles. Le joint d'étanchéité comporte, ainsi que cela est bien connu, une âme cylindrique 7 à laquelle sont raccordées par leur base une lèvre radiale 8 en appui sur la bague 2 et une lèvre axiale 9 en appui sur la bague 1.

L'âme cylindrique 7 s'étend radialement vers l'extérieur par deux séries de griffes 10, 11. La série de griffes 10 assure l'assemblage axial des bagues 1, 2 en combinaison avec la lèvre radiale 8. La série de griffes 11 assure la retenue axiale du roulement dans une cavité 12 de la carrosserie 13 qui reçoit l'amortisseur dont on a seulement représenté la coupelle supérieure 14 en appui sur la bague 2 du roulement.

L'agencement du joint d'étanchéité 6 par rapport aux bagues 1, 2 du roulement permet à celui-ci d'assembler lesdites bagues. A cet effet, les griffes 10 sont réparties à la périphérie du bord cylindrique de la bague supérieure 1 munie de fenêtres 15 et prennent appui sur le bord desdites fenêtres. Pour retenir le roulement dans la cavité 12, les griffes 11 s'étendent radialement au travers d'encoches 16 portées par la même bague 1.

Le montage faisant application du roulement axial conforme à l'invention permet le remplacement aisé d'éléments de la suspension sans démontage préalable du roulement.

## Revendications

1. Roulement axial, notamment pour suspensions à amortisseur de véhicules automobiles, du type comportant deux pistes (3, 4) de roulement, respectivement portées par une bague supérieure (1) et une bague inférieure (2), une pluralité de corps roulants (5) disposés entre lesdites bagues et un joint d'étanchéité (6) muni d'une lèvre circulaire radiale (8) et d'une lèvre axiale (9) et muni de moyens d'assemblage des bagues, caractérisé par le fait que les lèvres (8, 9) sont réunies pour leur base à une âme cylindrique (7) qui s'étend radialement vers l'extérieur par des griffes (10) pour l'assemblage axial des bagues (1, 2) et par des griffes (11) pour la retenue axiale du roulement sur un élément (13) de carrosserie du véhicule.

2. Roulement axial selon la revendication 1, caractérisé par le fait que la bague supérieure (1) est munie de fenêtre (15) pour le passage des griffes (10) d'assemblage et d'encoches (16) pour le passage des griffes (11) de retenue.

## Ansprüche

1. Axialwälzlager, insbesondere für einen Stoßdämpfer einer Kraftfahrzeugaufhängung, mit zwei Wälzbahnen (3, 4), die von einem oberen Ring (1) bzw. von einem unteren Ring (2) getragen werden, mit einer Vielzahl von Wälzkörpern (5), die zwischen diesen Ringen angeordnet sind, mit einer Dichtung (6), die mit einer kreisförmigen radialen Lippe (8) und mit einer axialen Lippe (9) versehen ist und mit einer Vorrichtung zum Zusammenbau der Ringe, dadurch gekennzeichnet, daß die Grundflächen der Lippen (8, 9) miteinander über ein zylindrisches Mittenteil (7) verbunden sind, das sich radial nach außen mittels Klauen (10) erstreckt zum axialen Zusammenbau der Ringe (1, 2) und mittels Klauen (11) zur axialen Halterung des Lagers auf einem Karosserieteil (13) des Fahrzeugs.

2. Axialwälzlager nach Anspruch 1, dadurch gekennzeichnet, daß der obere Ring (1) mit Öffnungen (15) versehen ist zum Durchlaß der Klauen (10) zum Zusammenbau und mit Ausschnitten (16) zum Durchlaß der Halteklauen (11).

## Claims

1. An axial bearing, particularly for shock-absorber suspensions of motor vehicles, of the type comprising two bearing races (3, 4) respectively carried by an upper ring (1) and a lower ring (2), a plurality of rolling bodies (5) disposed between the said rings and a sealing-tight gasket (6) provided with a radial circular lip (8) and an axial lip (9) and provided with means of assembling the rings, characterised in that the lips (8, 9) are connected by their base to a cylindrical core (7) which extends radially outwardly via claws (10) for axial assembly of the rings (1, 2) and via claws (11) for axially retaining the bearing on an element (13) of the vehicle bodywork.

2. An axial bearing according to Claim 1, characterised in that the upper ring (1) is provided with windows (15) for passage of the assembly claws (10) and notches (16) for passage of the retaining claws (11).

FIG 1

FIG 3

FIG 2